Europäisches Patentamt

European Patent Office

Office européen des brevets

(19)

(11) Publication number: **0 044 823**

A2

(12) **EUROPEAN PATENT APPLICATION**

(21) Application number: **81830126.9**

(22) Date of filing: **20.07.81**

(51) Int. Cl.³: **G 01 B 3/18**
**G 01 D 5/36**

(30) Priority: **22.07.80 IT 4929980**

(43) Date of publication of application:
**27.01.82 Bulletin 82/4**

(84) Designated Contracting States:
**AT BE CH DE FR GB LI LU NL SE**

(71) Applicant: **S.T.A. Sviluppo Technologie Avanzate S.p.A.**
**Via Asse Attrezzato**
**I-03013 Ferentino(IT)**

(72) Inventor: **Brecciaroli, Roberto**
**7 via G. Prati**
**I-00152 Roma(IT)**

(74) Representative: **Bazzichelli, Alfredo et al,**
**c/o Società Italiana Brevetti Piazza Poli 42**
**I-00187 Roma(IT)**

(54) **A digital reading micrometer.**

(57) A digital-reading micrometer, portable and self-contained, comprising a sliding micrometer screw, as well as an opto-electronic system in order to visually display in a digital form the reading of the effected micrometric measurement of a length.

FIG.1

EP 0 044 823 A2

S. T. A.

SVILUPPO TECNOLOGIE AVANZATE S.p.A.


A digital reading micrometer.


The present invention refers to a direct digital reading micrometer, presented by an electronically controlled display device which is embodied in the instrument itself.


In order to measure lengths with micrometric accuracy, micrometers are well known in the art, in which the reading is effected on a graduated scale existing in the instrument, with the aid of a nonius or vernier scale. Such a reading, which foresees an operation on a fixed graduated scale and a movable graduated scale, is, however, subject to a viewing error by the part of the operator (parallax or reading error) as well as to a systematic error due to the thickness of the notches engraved on the instrument, which notches necessarily foresee a tolerance limit, which represents the accuracy limit for the measurement effected on the instrument.

Precision measuring instruments are also known, provided with a digital indicator of the dial type, in which the measure is visually presented by an indicator shaped as a pointer on a fixed dial. The instruments provided with said dial, however, rather than micrometer, are in effects calipers, in which the reading is mechanically controlled by a sliding member of the instrument, this being different from what happens with the true micrometers, in which the movable surface rotates in respect of a fixed anvil.

It is also known that these instruments of the dial type are provided with a loading spring for the resetting of the instrument, which exceeds the existing regulations.

Furthermore, instruments are known, based upon the principle of the micrometric screw, which may be coupled with electronic measurement-processing units, with digital display, these instruments, however, being bench instruments, since the connection with the processing unit is effected by means of a connecting cable, and the instruments cannot be considered as portable and handy instruments.

The object of the present invention is a portable and self-contained micrometric instrument, which differs from the already existing instruments by the fact that it presents the effected measure only in a direct digital form, displayed on a visualizer applied upon the housing of the instrument, so that the readings on graduated scales or similar are eliminated, and subjective or parallex errors are avoided. The measurement is presented in a numerical, i.e. digital, form with the desired accuracy, of the order of a hundredth or a

- 3 -    **0044823**

thousandth of a millimeter.

Another object of the present invention is a micrometer which, differently from the known micrometers, presents a micrometric screw which does not rotate about its longitudinal axis, but slides along its longitudinal axis, moved by a lead nut placed internally to the instrument, driven by the operator. In other words, in the micrometer according to the invention the operator does not act directly upon the micrometric screw, but acts directly upon the lead nut, whereas in the already known micrometers, the exact opposite takes place. This allows to set in the workshop, once for all, all the adjustments of the instrument, without the need for the operator to control every time whether the instrument is well adjusted or not.

A further aspect of the present invention is represented by a micrometer of the above indicated type, in which an optical-electronic (opto-electronic) system processes the effected measurement, by translating the number of revolutions impressed to the said lead nut into a well determined number of electrical pulses which are processed by an embodied electronic logic, so that the system will present on a digital display device of the liquid crystal or diode type the exact reading of the measure.

In order to achieve the above-indicated objects, the present invention is, therefore, represented by a micrometer which includes the combination, within a portable housing, of: a frame, a lead nut rotatably supported within said frame and provided with an internal micrometric screw thread, engaged with a micrometric screw provided with an external micrometric thread and tied to said frame in such a way so as to be able to slide without rotating; an opto- electronic unit formed by an optical coding device including one or more emitters of a light beam and one or more receivers for that light beam, said receiver or receivers controlling a converter from a light signal to electrical pulses, along the path of said light beam between the emitter and the receiver, a rotatable member being interposed which is integral with the said lead nut, said member being provided with a plurality of means apt to intercept alternatively the said light beam, so that, following a given rotation of the lead nut, said receiver will receive a series of light pulses, which are converted into a series of electric pulses; a microprocessor which processes said pulses, converting them into a micrometric measurement of a length; a visualizer, or display device, fixed to said housing, apt to indicate in a digital form said measurement; and an independent source of electric energy in order to feed said electronic components.

Preferably, the rotatable member, integral with the lead nut, provided with means to intercept or alternatively transmit said light beam, is composed of a disc, integral with the lead nut, provided with a series of small windows arranged regularly along a circle of said disc, and a diaphragm, fixed in respect to the frame and coaxial with said disc, and provided with two slits, offset each in respect of the other, optically aligned with a photodiode and a phototransistor, in such a way that the light emitted by the photodiode will be transmitted through one of said small windows, or respectively intercepted between a window and the adjacent one, so that the phototransistor will emit a certain number of electrical pulses which is directly related with the value of the angle by which the said lead nut has been made to rotate, and, therefore, is directly related with the linear displacement effected by the micrometric screw.

In order to better illustrate the invention, reference is now made to an embodiment of the invention itself, represented in the accompanying drawings, in which:

Figure 1 is a view of the portable micrometer, of the digital-reading type;

Fig. 2 is a longitudinal section of the micrometer, said section showing its internal parts;

Fig. 3 is an exploded view of the optical coding device, on an enlarged scale;

Fig. 4 is a block diagram of the opto-electronic system; and

Fig. 5 shows in section, on an enlarged scale, the mechanical system for the feeding of the micrometric screw; and

Figs. 6(a) and 6(b) show the waveform of pulses produced by the coding device.

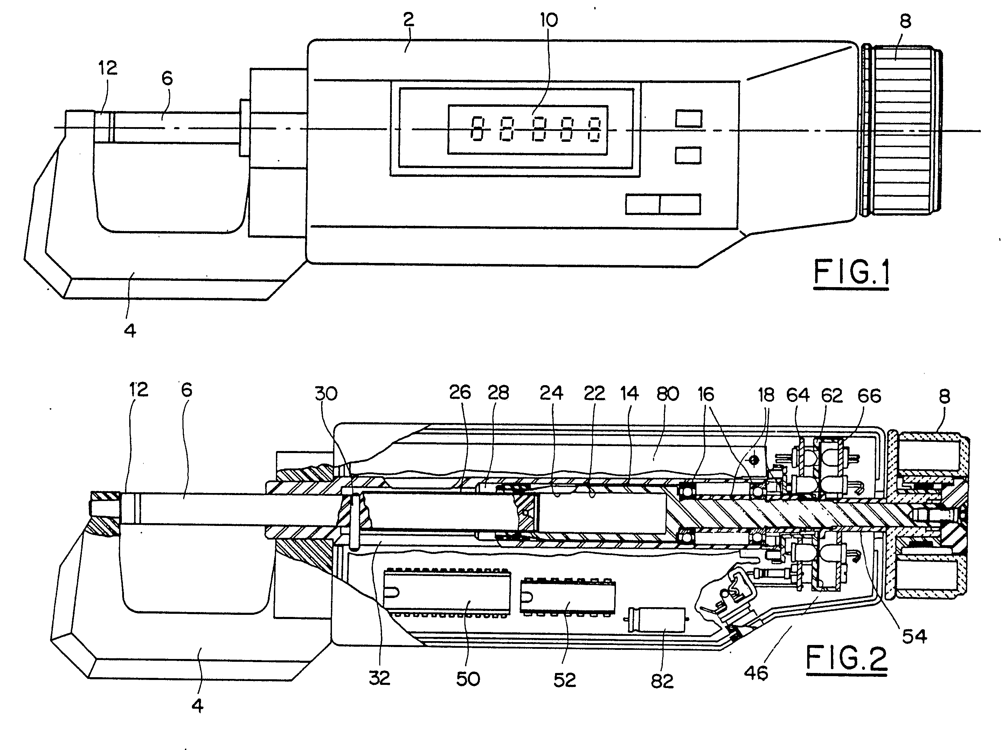

As shown in the general view of Fig. 1, the micrometer 1 comprises an external housing 2, an U-shaped stand 4, a micrometric screw 6 and a knob 8 for feeding the screw 6. On the housing 2, a visualizer or display 10 is visible, in which, in a digital form, the micrometric reading appears. In its whole appearance, therefore, the micrometer is composed of a light and easily transportable object, completely independent from external connections, which is utilized substantially in the same way as conventional micrometers are used, that is by manoeuvering the knob 8, the micrometric screw 6 is made to advance or withdraw in respect of the striker 12 of the stand 4, so that its employment will not present the least difficulty.

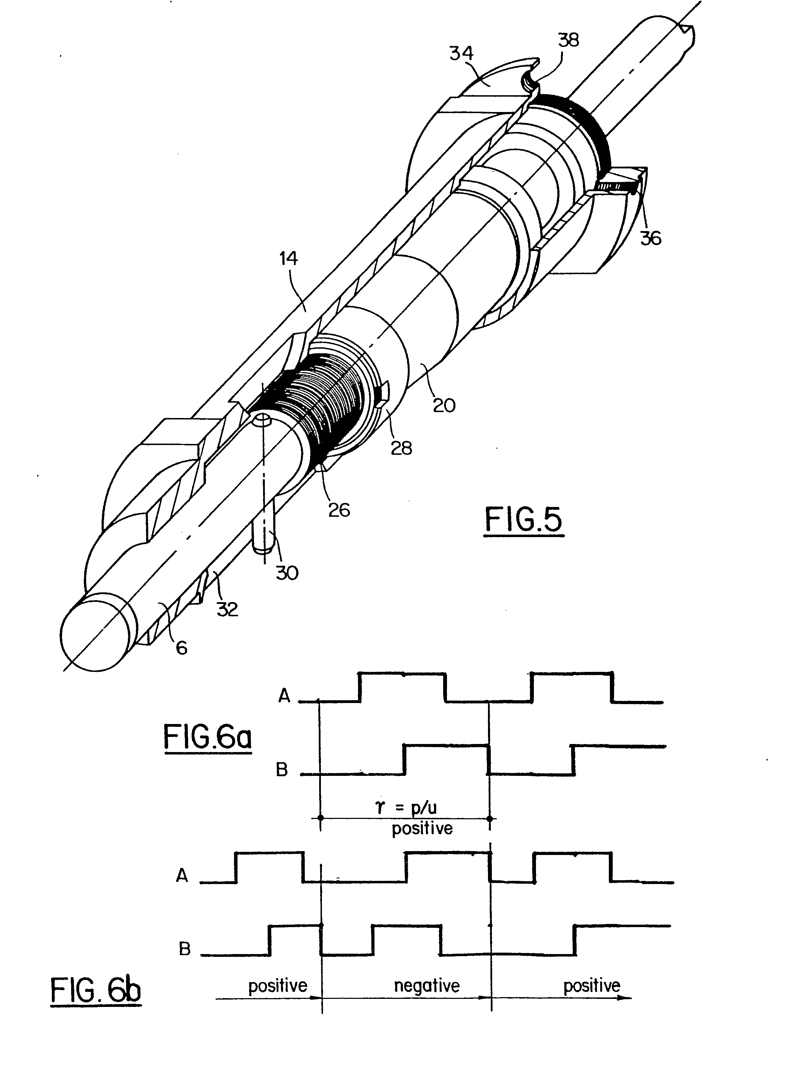

The mechanics now will be described which concerns the feeding of the micrometric screw, and this by making reference to Figs. 2 and 5.

A frame 14 of a generally tubular shape is anteriorly fixed to the stand 4, and inside its end back portion two ball bearings 16 are housed, which are kept in position by means of tubular inserts 18 which are fixed to the frame or tube 14.

A lead nut 20 is coupled inside the frame 14 with said ball bearings 16, in such a way to be able to rotate in respect to the frame in a given fixed position inside it. Said lead nut 20 possesses at its back portion an extension which projects out of the housing 2, for the coupling with the knob or ball grip 8.

The lead nut 20 presents a recess 22, whose front portion is internally threaded in 24, for the coupling with the external thread 26 of the micrometric screw 6. Said micrometric screw 6 is coupled, at the back with the internal thread of the lead nut 20, as already mentioned, and is inserted, at the front portion, into the front portion of the frame 14, so that it will be able to rotate within it. An adjusting ring nut 28, thread-coupled on the threading of the micrometric screw 6 and arranged in a given position inside the frame 14, keeps in a registered position the coupling between the micrometric screw 6 and the lead nut 20. Such registered position is fixed at the moment of the assembling and is not accessible from outside, so that the micrometer is calibrated at the factory, once and for all.

The micrometric screw 6 is provided with a cylindro-conical pin 30, interference-fixed, which is able to slide along a guiding slit 32 machined in the frame 14, so that said screw 6 is able to slide, but not to rotate, within the frame 14.

The knob 8, fixed to the back extension of the lead nut 20, for instance by means of a screw (Fig. 2), contains a friction system of the type usually encountered in micrometers, through which the rotation of the knob 8 will produce a rotation of the lead nut 20 on the bearings 16, until the micrometric screw 6 is able to displace itself, but will produce a sliding when the micrometric screw 6 is blocked.

Therefore, the operational mode of the mechanical system is as follows:

The rotation of the knob 8 causes normally the rotation of the lead nut 20, which, through the engagement of the threads 24 and 26, causes an advance or a withdrawal, according to the direction of rotation of the knob 8, which advances towards, or withdraws from, the striker 12 of the U-shaped stand, without rotating.

From what has been above described, one understands that, differently from the conventional micrometers, in which the rotation of a knob causes directly the rotation of a micrometric screw coupled with a completely fixed lead screw nut, in the micrometer of the present invention the knob 8 causes the rotation of the lead nut 20, instead of the micrometric screw; in this way, it is possible to achieve a micrometer in which the micrometric screw 6 slides without rotating at the same time.

The frame 14 is provided, at its back end, with a flange 34 which serves the purpose of the assembling of the external housing 2, by screws which couple with the thread 36, and also the purpose of the assembling of the opto-electronic unit, which is fixed by screws into threaded holes, one of which has been indicated by 38. The opto-electronic unit will now be described which is employed in this embodiment of the invention.

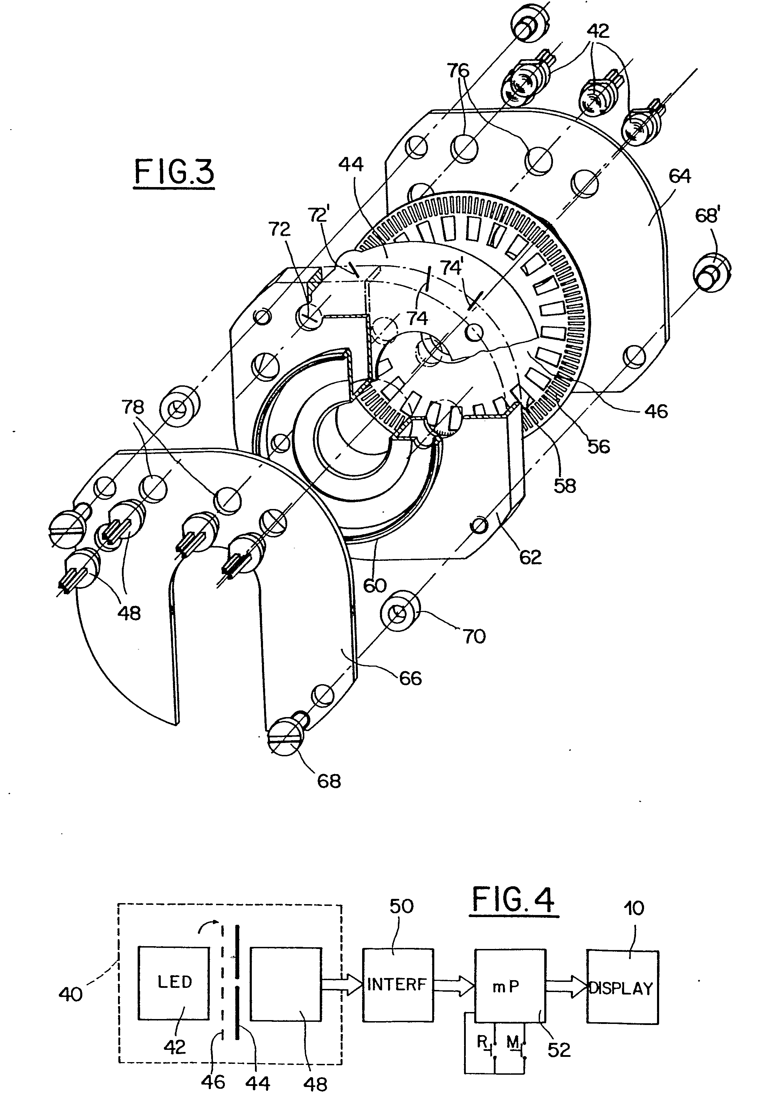

It is composed, in general, with reference now to Fig. 4, of a coding device indicated by 40, including a light source, for instance a light-emitting diode (LED) 42, a diaphragm 46, a disc 44 provided with small windows, which will be described in the following, and a receiver of light signals, for instance a phototransistor 48, apt to translate said signals into electric pulses which are transferred to an interface 50, which in turn transmits them to a microprocessor 52, which processes the pulses and presents them to the display 10 under digital form. Said interface 50 comprises Schmitt's trigger circuits for shaping (squaring up) the signals arriving from the coding device, bidirectional counters and networks of the RC type for building the controlling logic for said counters.

Turning now to a detailed description of the coding device 40, and with reference to the Fig. 3, in the preferred embodiment, said device is composed of a disc 46 which is integral with the lead nut 20 and is fixed, for instance, to a tubular insert 54 (Fig. 2) which is keyed on the extension of the lead nut 20.

Said disc 46 is provided in the illustrated example, with two series of small windows, 56 and respectively 58, which are respectively arranged around concentric circles of the disc 46.

As it will be described in the following, the disc 46 could be provided with only a series of small windows, said two series having the purpose, in the specific case, of providing readings of the order of a thousandth and of a hundredth of a millimeter.

The small windows 56 and 58 are arranged according to regular intervals (steps) and, in the illustrated case, the small windows 56 are in number of 125, whereas the windows indicated by 58 are in number of 25, so that, defining as "step" (or pitch) of a series of small windows the arc of circle which includes a "void" plus a "full", in which the void's arc and the full's arc are equal to each other, the series of small windows 56 will present 125 steps, whereas the series of small windows 58 will present 25 steps.

As already said, the disc 46 is integral with the lead nut 20, and a rotation of the knob 8 causes a rotation of the disc 46 by the same angle.

The coding unit 40, as previously mentioned, is fixed to the flange 34 of the frame 14 by means of an assembling flange 60 screwed into the threaded holes 38. With the assembling flange 60 a framework 62 is integral, which is intended to house the diaphragm 44, as well as to support two plates 64, 66 which are fixed to the framework 62 by means of screws 68, 68' and spacers 70.

The diaphragm 44, in the embodiment represented in Fig. 3, presents two pairs of slits 72, 72' and 74, 74', each of these pairs being intended to act in cooperation with a respective series of small windows 56 and 58. In the illustrated case, the slits 72, 72' cooperate with the small windows 56 and the slits 74, 74' cooperate with the small windows 58.

The distance between the slits of the same pair (for instance the distance between the slits 72 and 72') is realized on the diaphragm 44, so that they will be offset by 1/4 of a step in respect of the step of the respective small windows of the disc 46.

As it will be better explained in the following, in principle, a single small window would suffice for each series of small windows, but the adoption of a pair of slits has the purpose of achieving signals which are out of phase by 90°, in such a way as to provide the microprocessor with signals which will indicate the direction of rotation of the knob 8.

The plate 64 supports light sources 42 which, in the illustrated example, are preferably composed of Light-Emitting Diodes (LEDs), and the plate 66 supports elements 48 which are sensitive to the light, which in the illustrated example are represented by phototransistors. The components 42 and 48 are inserted in holes, 76 and 78 respectively, which are respectively present in the plates 64 and 66, which holes are optically aligned each other and at the level, in the circumferential sense, of the respective small windows 56 and 58 on the disc 46, and are also optically aligned with a respective slit on the diaphragm 44.

With this arrangement, in which, as already recalled, LEDs 42, the diaphragm 44 with its slits, and the phototransistors 48 are fixed in respect to the frame 14, whereas the disc 46 rotates, integral with its lead nut 20, a light ray emitted for instance by the LED 42, placed opposite the slit 72, will reach the phototransistor 48 aligned with it, when between the slit 72 and the phototransistor 48 a small window 56 is interposed, whereas
said light beam will be intercepted so that it will not
reach the phototransistor 48, when between them a "full"
is interposed of those existing between the small
windows 56. In this respect, it will be noted that the
width of each slit of the diaphragm 44 will be equal
approximately to 1/4 of the "stop" of the respective
small windows.

Thus, a rotation of the knob 8 will have the effect
that the phototransistors 48 will be struck by a series
of light pulses whose number will depend on the number
of small windows which passed before the respective slit,
that is whose number will be proportional to the arc of
rotation effected by the lead nut 20. Therefore, in the
illustrated example, each group LED-slit-phototransistor
will provide two signals for each step of the disc 46,
and each pair of said groups will provide four pulses
for each step of the disc 46. Since the small windows 56
represent 125 steps, we will have in this way 125 x 4
= 500 pulses for each turn of the lead  nut 20. Since the
pitch of this lead nut is of about 0.5 mm, this amount of
pulses will allow, therefore, a reading resolution power
of 1/1000, that is an accuracy of the order of 1 micron.
Making reference, however, to the series of small windows
58 which represents 25 steps, we will get a reading resolution power of 1/100, that is of one hundredth of 1 mm.

The pulses in this way produced are decoded and processed
in a logic circuit composed of the interface 50 and the
microprocessor 52, which are for instance mounted on a terminal board 80 (Fig. 2), in which also a battery 82 is mounted, preferably of the recharge type, for the electric supply.

The function of the circuit is to digitalize a dimension of a mechanical piece, picked up on the axis of the micrometer and referred to a point whatsoever of the axis. The dimension, expressed in hundredths or thousandths of 1 millimeter, is visualized with its own sign on the display 10, in four or five figures. The display 10 is able to display all the number from -99.999 to +99.999 or, respectively, from -99.99 to +99.99.

In a few words, the circuit, after having been set to zero when the axis is brought on the selected reference point, will recognize the direction of advancement of the axis, will consequently increase or decrease the dimension, and will calculate the sign.

Furthermore, in order to economize the energy supplied by batteries of the recharge type, the circuit, following a command by the operator, will disconnect the dimension sensors, but will store the dimension itself in order to be able to start again from the same point. The circuit, then, disconnects the display, except for the sign and the decimal point, in order to give to the operator a mnemonic reference.

The dimension is picked up by means of the pulses produced by the previously described opto-electronic unit 40.

Indicating with p (step) the arc formed by two succeeding small windows, the slits on the diaphragm shall be out of phase by p/4,　　and shall be at a mutual distance equal to:

$p (n + 1/4)$, where $\underline{n}$ is integer. Let us call A and B the two series of pulses obtained from each slit, when the axis of the micrometer is advancing; these pulses can be as indicated in Fig. 6$\underline{a}$ (no change of direction, and a constant speed of advancement) or else as shown in Fig. 6$\underline{b}$ (two succeeding changes of direction, and constant speed).

From the processing of the signals A and B, count pulses are obtained (one pulse for each variation of A or B, and therefore four pulses for each step) for the command UP/DOWN, that is in order to increase or decrease the value shown by the counter, and to get the value of the sign of the count.

In Fig. 6$\underline{a}$, the following sequence of A and B signals is shown:

|   |   |   |   |   |
|---|---|---|---|---|
| A | 0 | 1 | 1 | 0 |
| B | 0 | 0 | 1 | 1 |

to indicate the positive direction of the axis (that is the direction which causes an increase of the count in the counter if its sign is positive, and a decrease if its sign is negative), whereas the sequence shown in Fig. 6$\underline{b}$:

A          0 0 1 1
B          0 1 1 0

indicates the negative direction (that is the direction which causes a decrease of the count in the counter if the sign is positive, and an increase if the sign is negative).

These sequences are processed by bidirectional counters, which, in turn, are read by the microprocessor, at regular time intervals. In this way, two advantages are achieved:

1) the microprocessor is relieved of the task of the continuous counting of the pulses and, therefore, it has a larger amount of time available for effecting auxiliary functions (go - no go, metric conversions, and so on);

2) Since the microprocessor reads the contents of the counters at succeeding time intervals, if we possess counters having a high capacity, so that between said two succeeding intervals an overflow will not take place, the operational velocity of the micrometer can increase by several orders of magnitude in respect of the case of unavailability of said kind of counters.

For the processing of the described functions, a microprocessor of the type TMS 1000 C MOS has proven to be suitable; this microprocessor of "Texas Instruments Co." has a 1K byte store.

From the standpoint of the practical utilization, the microprocessors effect the following functions:

- digital visualization of a dimension of an object being measured;
- ability to put to zero the instrument at any position within the measuring field (reset);
- storing of a dimension and recall, at any position of the run, of the dimension referred to the previous resetting;
- indication, on the display, of the symbols GO - NO GO in respect to the tolerance of a preselected dimension; and
- displaying, on the visualizer, of the letter E (error) in the case of non-correct utilization of the instrument.

In the case that the instrument is left unintentionally connected after the execution of a measuring, the program intervenes after 30 seconds, deleting the figures from the visualizer and letting lighted the point only, storing the dimension.

A particular advantage offered by the present invention is that the micrometer according to the invention is able to operate as a GO - NO GO gauge, which does not happen with the conventional micrometers. In this way, the micrometer acts as a true gauge, offering the opportunity of having two types of instrument in a single apparatus.

Although the invention has been described according to one of its preferred embodiments, it is obvious that the invention may be realized according to the same concepts, but adopting some suitable variants or modifications.

For instance, the opto-electronic unit, instead of being based on the disc provided with small windows, could be based upon a system of the light reflection type, in which case the rotatable element, integral with the lead nut, would be composed of a drum presenting an alternate series of reflecting and non-reflecting surfaces, achieving the same results.

Furthermore, the disc 46 could be provided with a single series of windows instead of two, and the sensors could be realized by having recourse to elements or components different from the LEDs and the phototransistors, as it appears obvious to the skilled in the art.

Furthermore, it is obvious that different types of microprocessors may be utilized in order to effect the desired logic functions, all this obviously being within the scope of the present invention.

Claims

1. A digital-reading micrometer comprising the combination of, in a single portable housing:

a frame; a hollow lead nut rotatably supported by said frame and provided with a micrometric threading internally to its cavity; a micrometric screw supported at one end on said frame, provided with an external micrometric threading supported and engaged by that internal threading of the lead nut and tied to said frame by guide means allowing it to slide without rotating; an opto-electronic unit composed of an optical coding device including an emitter of light beams and a receiver of said light beam, which controls a converter from a light signal into an electric pulse, along the path of said light beam being interposed a rotatable member, integral with said lead nut, provided with a plurality of means for intercepting and transmitting alternately said light beam, so that following a given rotation of the lead nut, said converter will produce a certain amount of electric pulses; a microprocessor apt to process said pulses in order to convert them into a micrometric measure of a length; a display indicating said measure in a digital form; and a source of electric energy.

2. A micrometer according to Claim 1, in which said frame is composed of a tubular member in whose cavity, at a first end, a ball-bearing is housed which supports the said lead nut, while the said tubular member houses, at its second end, and supports said micrometric screw, said tubular member having an elongated slit in which is slidingly engaged a guiding pin, integral with the micrometric screw, said screw being inserted within said tubular member.

3. A micrometer according to claim 2, wherein a registering or adjusting ring nut is housed within said tubular member in order to support the ends of the micrometric screw and of the lead nut which are threadedly engaged.

4. A micrometer according to claim 1, wherein the pitch of the screw is 0.5 mm.

5. A micrometer according to claim 1, wherein said coding device comprises: a disc integral with the lead nut provided with small windows arranged at a regular mutual distance along a circle of said disc; a diaphragm, fixed in respect to the frame, and coaxial with said disc, provided with at least one slit; a light source and a photo-sensor, opposed each other and aligned with the slit of said diaphragm, at the level of said circle of the disc, so that the light emitted from the source will reach, or will not reach, the photosensor according to the fact that between the slit of the diaphragm and the photosensor a small window is interposed or not.

6. A micrometer according to claim 5, wherein said disc is supported integrally on an extention of said lead nut, which projects from said tubular member, and the diaphragm, the photosensors and the light sources are supported from said first end of the tubular member.

7. A micrometer according to claim 6, wherein said disc presents a first series of 125 small windows having a mutual distance equal to their width, as well as a second series, concentric with the first, of 25 small windows having a pitch which is five times that of the first series, said diaphragm is provided with two pairs of slits, each pair being respectively aligned with the small windows of the first and of the second series, the slits of each pair being at a circumferential distance such to produce pulses, which are mutually offset by 1/4 of the step of each series of small windows, a pair of light sources and photosensors being present for each of said slits, so that said first series of small windows will permit the reading of thousandths and said second series a reading of hundredths.

8. A micrometer according to claim 7, wherein said light sources are Light-Emitting Diodes, and said photosensors are phototransistors.

9. A micrometer according to claim 1, wherein the signals arriving from the coding unit are read in a continuous way by bidirectional counters contained in an. interface, whose output is then read, at succeeding intervals, by the microprocessor, in such a way to increase the response speed of the micrometer and to leave time intervals available to the microprocessor so that it can effect accessory functions.

10. A micrometer according to claim 9, wherein said microprocessor effects the following functions: the digital
visualization of the dimension of an object being
measured, the zero setting of the instrument at any
position within the measurement band; the storing of a
dimension and the recall of the dimension referred to
the previous zero-setting; the indication of the
symbols GO, NO GO on the display; and the visualization,
on the display device, of the symbol of an error in the
case of non-correct use of the instrument.

FIG.1

FIG.2

## FIG.3

## FIG.4

FIG.5

FIG.6a

$\gamma = p/u$
positive

FIG.6b

positive    negative    positive